(19) **Europäisches Patentamt**
**European Patent Office**
**Office européen des brevets**

(11) **EP 4 635 653 A1**

(12) **EUROPEAN PATENT APPLICATION**

(43) Date of publication:
**22.10.2025 Bulletin 2025/43**

(21) Application number: **24170921.1**

(22) Date of filing: **18.04.2024**

(51) International Patent Classification (IPC):
**B22F 10/28** (2021.01)    **B22F 10/36** (2021.01)
**B22F 10/366** (2021.01)    **B22F 10/80** (2021.01)
**B33Y 10/00** (2015.01)    **B33Y 50/00** (2015.01)
**B33Y 50/02** (2015.01)    **G05B 19/00** (2006.01)

(52) Cooperative Patent Classification (CPC):
**B22F 10/28; B22F 10/36; B22F 10/366;
B22F 10/80; B33Y 10/00; B33Y 50/00; B33Y 50/02;
G05B 19/4099;** G05B 2219/49008

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **TRUMPF Additive Manufacturing Italia
S.r.l.**
**36015 Schio (VI) (IT)**

(72) Inventors:
• **Arikcan, Fatih**
  **74199 Untergruppenbach (DE)**
• **Boron, Mattia**
  **35036 Montegrotto Terme (IT)**

(74) Representative: **Trumpf Patentabteilung
Trumpf SE + Co. KG
TH550 Patente und Lizenzen
Johann-Maus-Straße 2
71254 Ditzingen (DE)**

(54) **METHOD AND PLANNING DEVICE FOR PLANNING A LOCALLY SELECTIVE IRRADIATION OF A WORKING AREA, COMPUTER PROGRAM, METHOD AND MANUFACTURING DEVICE FOR ADDITIVELY MANUFACTURING AN OBJECT FROM A POWDER MATERIAL**

(57) The invention relates to a method for planning a locally selective irradiation of a working area (9) with at least one energy beam (13) by displacing the at least one energy beam (13) along a plurality of different irradiation vectors (17) over a powder material layer (8) of a powder material (7) arranged in the working area (9) in order to manufacture an object (5), comprising:

i) determining the irradiation vectors (17) of the plurality of different irradiation vectors (17) each as a path following a contour line (21) of the object (5) in the powder material layer (8) with an assigned unique distinction parameter value of a distinction parameter ($d_c$) depending on a contour distance ($d$) between the respective irradiation vector (17) and the contour line (21), the contour distance ($d$) varying between the irradiation vectors (17),

ii) assigning at least a first, lower line energy value of a line energy to a first group (23.1) of irradiation vectors (17) and at least a second, higher line energy value of the line energy to a second group (23.2) of irradiation vectors (17), wherein the irradiation vectors (17) of the first group (23.1) each have distinction parameter values relating to greater contour distances ($d$) than the irradiation vectors (17) of the second group (23.2), and

iii) obtaining an irradiation plan.

Fig. 2

**Description**

The invention relates to a method for planning a locally selective irradiation of a working area, a planning device for planning a locally selective irradiation of a working area, a method for additively manufacturing an object from a powder material, a computer program for carrying out such a method, and a manufacturing device for carrying out such a method.

When building small parts such as, e.g., mesostructural elements for dental restoration, or even small islands in larger parts, by locally selectively irradiating a powder material in a working area with an energy beam, there is a high risk that the powder material will be overheated, leading to defects, in particular pores, and thus a decrease in the quality of the manufactured part. A further problem is that typically, in order to yield a high surface quality, rather thin powder material layers have to be successively arranged in the working area on top of each other, which in turn means that the respective parts are built from a large number of layers, and thus the production time is high. Enhancing the layer thickness may reduce the number of layers and, in consequence, the production time, however, the surface quality then will suffer.

It is therefore an objective of the invention to provide a method for planning a locally selective irradiation of a working area, a planning device for planning a locally selective irradiation of a working area, a method for additively manufacturing an object from a powder material, a computer program for carrying out such a method, and a manufacturing device for carrying out such a method.

This objective is achieved by providing the present technical teachings, in particular the teachings of the independent claims as well as the teachings of the dependent claims and the preferred embodiments disclosed in the description.

According to a first aspect, the objective is in particular achieved by providing a method for planning a locally selective irradiation of a working area with at least one energy beam by displacing the at least one energy beam along a plurality of different irradiation vectors over a powder material layer of a powder material arranged in the working area in order to manufacture an object - hereinafter referred to as "planning method" -, comprising:

i) determining the irradiation vectors of the plurality of different irradiation vectors each as a path following a contour line of the object in the powder material layer with an assigned unique distinction parameter value of a distinction parameter depending on a contour distance between the respective irradiation vector and the contour line, the contour distance varying between the irradiation vectors,
ii) assigning at least a first, lower line energy value of a line energy to a first group of irradiation vectors and at least a second, higher line energy value of the line energy to a second group of irradiation vectors, wherein the irradiation vectors of the first group each have distinction parameter values relating to greater contour distances than the irradiation vectors of the second group, and
iii) obtaining an irradiation plan.

By determining the irradiation vectors as paths following the contour line of the object, a smooth contour and thus a high surface quality can be achieved, in contrast to linear irradiation vectors oriented oblique to the contour line. Thus, high surface quality can even be reached with thicker powder material layers, such that the production time can be low, and the surface quality can still be high. However, an irradiation scheme comprising irradiation vectors defined as paths following the contour line typically suffers from a relatively high energy input in a region of a centre of the object and thus high temperatures in this region, resulting in the above discussed risk that the powder material will be overheated. In the inventive method, by assigning the at least one first, lower line energy value of the line energy to the first group of irradiation vectors and the at least one second, higher line energy value of the line energy to the second group of irradiation vectors, wherein the irradiation vectors of the first group each have distinction parameter values relating to greater contour distances than the irradiation vectors of the second group, overheating is avoided since the line energy is reduced in the regions where otherwise risk for overheating would exist, in particular in the region of the centre of the object.

In the context of the present teachings, determining the irradiation vectors of the plurality of different irradiation vectors each as a path following a contour line of the object in the powder material layer with an assigned unique distinction parameter value of a distinction parameter depending on a contour distance between the respective irradiation vector and the contour line, the contour distance varying between the irradiation vectors, in particular is understood to mean that the different irradiation vectors each resemble the contour line, but have different distances from the contour line, and further different distances to the centre of the object. The irradiation vectors preferably have the shape of closed loops extending along the object's contour, and are arranged inside each other in a nested manner, like, e.g., the rings of onion slices or tree-rings. In the alternative, such a closed loop may consist or be formed by more than one irradiation vector, the irradiation vectors forming the closed-loop being arranged in series one after the other. An irradiation scheme relying on such a plurality of irradiation vectors is also referred to as "offset-filling", since the contour line is progressively offset radially towards the centre of the object in order to generate the different irradiation vectors, such that the object's cross-sectional plane in the powder material layer is filled by the progressively offset contour lines.

In the context of the present technical teachings, line energy in particular is understood to mean beam energy of the energy beam per unit length along an irradiation vector, and in particular may be defined as beam power divided by the displacement velocity of the energy beam along the irradiation vector.

In the context of the present technical teachings, the distinction parameter in particular is understood to mean a parameter which is indicative of the position of the respective irradiation vector to which it is assigned within the plurality of irradiation vectors, in particular indicative for the contour distance of the respective irradiation vector. In a case where each irradiation vector is in the form of a closed loop extending along the contour, the distinction parameter unambiguously defines its respective irradiation vector.

In an embodiment, the distinction parameter increases with decreasing contour distance, i.e. it is defined in such a way, that irradiation vectors closer to the contour line - i.e. having a smaller contour distance - have greater distinction parameter values than irradiation vectors being farther away, i.e. having a greater contour distance, from the contour line, and thus being closer to the object's centre. Thus, the distinction parameter rises towards the contour line.

In a simple approach, the distinction parameter may be the contour distance itself, or, in accordance with the preferred increase of the distinction parameter with decreasing contour distance, a negative contour distance, or a distance of the respective irradiation vector from the object's centre, or a distance parameter defined as a shifted contour distance, in particular of the form

$$d_c := D - d , \qquad\qquad (1)$$

wherein $d_c$ is the distinction parameter, $D$ is the local distance - at a predetermined locus along the contour line - of the contour line from the object's centre, measured locally perpendicular to the contour line, and d is the contour distance of the respective irradiation vector, preferably measured along the same direction as the distance $D$ of the contour line from the object's centre. Since the contour distance $d$ becomes $D$ at the object's centre, the values of the distinction parameter $d_c$ rise from 0 at the object's centre to $D$ at the contour line.

In a more sophisticated approach, the distinction parameter may be a vector length of the irradiation vector. Particularly when the irradiation vectors are formed as closed loops, the vector length directly depends from the contour distance, and rises towards the contour line.

In a still more sophisticated approach, the distinction parameter may be a normalised distance parameter, in particular of the form

$$d_c := \frac{D-d}{D} , \qquad\qquad (2)$$

wherein, as defined above with respect to equation (1), $d_c$ is the distinction parameter, $D$ is the local distance of the contour line from the object's centre, measured locally perpendicular to the contour line, and $d$ is the contour distance of the respective irradiation vector. Since the contour distance $d$ becomes $D$ the object's centre, the values of the distinction parameter $d_c$ rise from 0 at the object's centre to 1 at the contour line.

Further, the contour distance is in particular understood to mean a radial distance, which preferably means a distance measured locally perpendicular to the contour line or perpendicular to the respective irradiation vector, preferably locally perpendicular to both the contour line and the respective irradiation vector.

In the context of the present teachings, the object's centre in particular is understood to mean the geometrical centre or centroid of the object's cross-section or of an island of the object's cross-section in the powder material layer, i.e the arithmetic mean position of all the points in the respective surface of the global object or the local island.

An island is in particular understood to mean an isolated region of the object's cross-section in the powder material layer, when this cross-section comprises at least two regions - i.e. islands - separated from each other.

In an embodiment, each irradiation vector in the object plane, or even each irradiation vector in the powder material layer is determined as a path following the contour line.

In another embodiment, other irradiation vectors are determined in addition to the plurality of different irradiation vectors, the additional irradiation vectors not being determined as paths following the contour line.

In an embodiment, the steps of the planning method are carried out for a plurality of powder material layers arranged in a temporal layer sequence - one after the other, in temporal succession - in the working area. In this way, a three-dimensional object, in particular a three-dimensional workpiece or component, is produced layer by layer. In particular, the steps of the planning method are carried out in or for each powder material layer.

In an embodiment, the object to be manufactured is a dental prosthesis, in particular a mesostructural element for dental restoration, in particular adapted to be fixed to an oral implant and further adapted to carry a suprastructure replicating at least one tooth.

In the context of the present technical teaching, an irradiation vector is understood to mean in particular a continuous displacement of the energy beam in the working area over a certain distance with a certain direction of displacement. The irradiation vector includes in particular the direction or orientation of the displacement, i.e. the vector orientation. The irradiation vector, in particular if it is a contour vector or vector determined as a path following the contour line, does not have to be formed as a straight line section at all, rather, an irradiation vector, formed in particular as a contour vector or as a path following the contour line, can also follow a line or curve that is curved at least in some areas.

In the context of the present technical teaching, a contour vector is understood to mean, in particular, a special irradiation vector extending along the contour line. The contour line is understood to mean, in particular, an imaginary boundary line of the object's cross-section, or of an island of the object's cross-section, in a respective powder material layer, that is, in particular, an imaginary boundary line or border of a cross-sectional area of the object to be manufactured, the cross-sectional area lying in the powder material layer. In particular, the contour vector preferably locally follows the shape of the contour line in the region of the contour line assigned to the contour vector.

Additive or generative manufacturing or production of an object or workpiece is understood to mean in particular a manufacturing process selected from a group, consisting of selective laser sintering, laser metal fusion (LMF), direct metal laser melting (DMLM), laser net shaping manufacturing (LNSM), selective electron beam melting ((S)EBM), and laser engineered net shaping (LENS). Accordingly, the manufacturing device disclosed below is particularly adapted to perform at least one of the aforementioned additive or generative manufacturing processes.

Preferably, the energy beam is selected from a group, consisting of an electromagnetic beam, in particular an optical working beam, in particular a laser beam, and a particle beam, in particular an electron beam. The optical working beam may be continuous or pulsed, in particular a continuous laser beam or a pulsed laser beam.

In an embodiment, the first group and the second group of irradiation vectors are delimited from each other by a predetermined threshold distinction parameter value. Thus, advantageously, the first group and the second group are distinguished from each other in a clear and simple, straightforward way. In particular, in one embodiment, all irradiation vectors of the first group have distinction parameter values relating to contour distances which are greater than each contour distance of any irradiation vector of the second group. In another embodiment, all irradiation vectors of the second group have distinction parameter values relating to contour distances which are smaller than each contour distance of any irradiation vector of the first group. It is possible, that all irradiation vectors of the first group have distinction parameter values relating to contour distances which are greater than the contour distance to which the threshold distinction parameter value relates, and/or all irradiation vectors of the second group have distinction parameter values relating to contour distances which are smaller than the contour distance to which the threshold distinction parameter value relates. In still another embodiment, all irradiation vectors of the second group have distinction parameter values relating to contour distances which are greater than the contour distance to which the threshold distinction parameter value relates, and/or all irradiation vectors of the first group have distinction parameter values relating to contour distances which are smaller than the contour distance to which the threshold distinction parameter value relates. However, the threshold distinction parameter value may also equal one of the distinction parameter values of an irradiation vector of the first group or of the second group.

In an embodiment, in a predetermined region comprising the threshold distinction parameter value, the line energy rises from the first line energy value to the second line energy value according to a rise function. Advantageously, this allows for a smooth transition between the regions in the working area comprising the threshold distinction parameter value.

In the context of the present technical teachings, a region comprising the threshold distinction parameter value in particular is understood to mean a geometrical region in the working area or the powder material layer in which an imaginary borderline between the first group and the second group of irradiation vectors is located, wherein the imaginary borderline is defined by the threshold distinction parameter value. In particular, the imaginary borderline may have the shape of an irradiation vector or even be an irradiation vector, to which the threshold distinction parameter value - theoretically or actually - is assigned.

The predetermined region comprising the threshold distinction parameter value may comprise the object's centre. In this case, preferably the line energy rises starting close to or precisely from the centre. In addition, or in the alternative, the predetermined region may end at the imaginary borderline defined by the threshold distinction parameter value; in this case, preferably the line energy rises up to the imaginary borderline and reaches the second line energy close to or precisely at the imaginary borderline.

In an embodiment, the rise function depends on the distinction parameter, i.e. the rise function is a function of the distinction parameter. Particularly, the rise function is the line energy as a function of the distinction parameter:

$$E_l = f(d_c) , \qquad\qquad (3)$$

with the line energy $E_l$ and the distinction parameter $d_c$.

Preferably, the rise function has more than two values for the line energy, i.e. the rise function is more complex than just a step function.

In an embodiment, the line energy rises according to a continuous rise function.

In an embodiment, the line energy assigned to the irradiation vectors varies according to a variation function of the distinction parameter, in particular according to:

$$E_l = f_v(d_c) \,, \tag{4}$$

with the line energy $E_l$, the distinction parameter $d_c$, and the variation function $f_v$.

Optionally, the distinction parameter increases with decreasing contour distance, and preferably the line energy then increases at least in regions with increasing distinction parameter values.

Optionally, the line energy varies according to a continuous variation function of the distinction parameter.

In an embodiment, the line energy increases globally, i.e. in its complete definition range, with decreasing contour distance and/or increasing distinction parameter values. In particular, the variation function is a global rise function.

In an embodiment, at least one function, selected from the rise function and the variation function, is a linear function, in particular a ramp, or a polynomial of at least the second degree. Thus, advantageously, there is a smooth transition between the line energy values assigned to the different groups of irradiation vectors, and the planning method is still simple and clear.

In an embodiment, a temporal sequence for processing of the irradiation vectors is determined such that irradiation vectors having a distinction parameter value relating to a greater contour distance are processed prior to irradiation vectors having a distinction parameter value relating to a smaller contour distance. Thus, irradiation vectors closer to the object's centre are processed prior to irradiation vectors closer to the contour line. In this way, advantageously, an accumulation of residual particles or dust near the object's centre prior to an irradiation of this region can be avoided. In accordance with the distinction parameter preferably increasing with decreasing contour distance, the temporal sequence for processing of the irradiation vectors is preferably determined such that irradiation vectors having a smaller distinction parameter value are processed prior to irradiation vectors having a greater distinction parameter value.

Preferably, the irradiation vectors are put in an unambiguous order according to their decreasing contour distances, or preferably rising assigned distinction parameter values, and the temporal sequence is determined in accordance with this order.

However, it is possible that in another embodiment the temporal sequence of the irradiation vectors is determined such that irradiation vectors having a smaller contour distance are processed prior to irradiation vectors having a greater contour distance.

In an embodiment, the distinction parameter is selected from a group, consisting of the contour distance, a vector length, the negative contour distance ($-d$), a distance parameter having a maximum at the contour line (see, e.g. eq. (1) and (2) above), and a combination parameter obtained by combining at least two of these parameters. The distance parameter may be normalised (see, e.g. eq. (2) above).

According to a second aspect, the objective is in particular achieved by providing a method for additively manufacturing an object from a powder material - hereinafter referred to as "first manufacturing method" -, comprising locally selectively irradiating a working area with at least one energy beam by displacing the at least one energy beam along a plurality of irradiation vectors over a powder material layer of a powder material arranged in the working area, wherein the irradiation vectors each follow a contour line of the object in the powder material layer with varying distinction parameter values depending on a contour - radial - distance between the respective irradiation vector and the contour line, the contour distance varying between the irradiation vectors, and wherein, in a predetermined manner, a first group of the irradiation vectors are processed with a lower line energy than a second group of the irradiation vectors, wherein the irradiation vectors of the first group have distinction parameter values relating to greater contour distances than the irradiation vectors of the second group. With respect to the first manufacturing method, in particular the same advantages are achieved as explained above in relation to the planning method.

The distinction parameter is preferably so defined that it increases with decreasing contour distance.

In the context of the present technical teachings, the first group of irradiation vectors being processed with the lower line energy than the second group of irradiation vectors in a predetermined manner in particular is understood to mean that the processing of the different groups does not depend from any observable, e.g. any measurement value, obtained during the actual manufacturing process, or, stated otherwise, there is no feedback for the determination of the line energy in accordance with the distinction parameter. Thus, the first manufacturing method is both simple and completely predictable.

The first manufacturing method in particular is an *ad hoc* method, i.e. the line energy for the irradiation vector is not planned in an upstream planning method, but rather assigned during the manufacturing process, but in the predetermined manner, wherein the predetermined manner is specified prior to the actual manufacturing process, and in particular not changed or amended during the actual manufacturing process.

In particular, the first manufacturing method is carried out for a plurality of powder material layers, thus forming an object in a temporal sequence of powder material layers, layer by layer.

In an embodiment, the line energy is varied according to a predetermined - preferably continuous - rise function of the distinction parameter in a predetermined region comprising the threshold distinction parameter value, where the line energy rises from the first line energy value to the second line energy value.

In an embodiment, the line energy is varied according to a predetermined - preferably continuous - variation function of the distinction parameter. Optionally, the distinction parameter increases with decreasing contour distance, and preferably the line energy increases at least in regions, preferably globally, with increasing distinction parameter value.

In an embodiment, at least one function, selected from the rise function and the variation function, is a linear function, in particular a ramp, or a polynomial of at least the second degree.

In an embodiment, the line energy is varied by varying at least one line energy parameter, selected from a group, consisting of the beam power of the at least one energy beam, a velocity of the displacement of the at least one energy beam in the working area - in particular along an irradiation vector, and a combination of at least two of these line energy parameters.

In an embodiment, irradiation vectors having a distinction parameter value relating to a greater contour distance are processed prior to irradiation vectors having a distinction parameter value relating to a smaller contour distance. In particular, when the distinction parameter value is so defined that it increases with decreasing contour distance, preferably irradiation vectors having a smaller distinction parameter value are processed prior to irradiation vectors having a greater distinction parameter value.

According to a third aspect, the objective is in particular achieved by providing a method for additively manufacturing an object from a powder material - hereinafter referred to as "second manufacturing method" -, comprising the following steps: providing an irradiation plan obtained by means of the planning method according to the invention, or at least one of the above-disclosed embodiments of the planning method, in particular by carrying out the planning method according to the invention, or at least one of the above-disclosed embodiments of the planning method, for the locally selective irradiation of a working area with at least one energy beam, and manufacturing the object according to the irradiation plan. With respect to the second manufacturing method, in particular the same advantages are achieved as explained above in relation to the planning method and the first manufacturing method.

In contrast to the first manufacturing method, the second manufacturing method is not an *ad hoc* manufacturing method, but a pre-planned manufacturing method relying on the line energy for the irradiation vectors being planned in the upstream planning method.

In an embodiment, the second manufacturing method includes a step of carrying out the planning method according to the invention, or at least one of the above-disclosed embodiments of the planning method, and obtaining the irradiation plan. Alternatively, the irradiation plan is obtained prior to carrying out the second manufacturing method and just provided in order to then carry out the second manufacturing method.

According a fourth aspect, the objective is in particular achieved by providing a computer program comprising instructions which, when the computer program is executed on a computing device - in particular a control device of a manufacturing device -, cause the computing device to carry out a planning method according to the invention, or at least one of the above-disclosed embodiments of the planning method, or a (first or second) manufacturing method according to the invention, or at least one of the above-disclosed embodiments of the (first or second) manufacturing method. With respect to the computer program, in particular the same advantages are achieved as explained above in relation to the planning method, the first manufacturing method, and the second manufacturing method.

Also part of the invention is a - in particular electronically readable, or otherwise machine-readable - storage medium, comprising the computer program.

According to a fifth aspect, the objective is in particular achieved by providing a planning device for planning a locally selective irradiation of a working area with at least one energy beam in order to manufacture an object from a powder material arranged in the working area, wherein the planning device is adapted to carry out a planning method according to the invention, or at least one of the above-disclosed embodiments of the planning method. With respect to the planning device, in particular the same advantages are achieved as explained above in relation to the planning method, the first manufacturing method, the second manufacturing method, and the computer program.

In particular, the planning device comprises means for carrying out a planning method according to the invention or according to at least one of the embodiments as disclosed above.

In an embodiment, the planning device is designed as a device selected from a group consisting of a computer, in particular a personal computer (PC), a plug-in card or driver card, and an FPGA board. In one embodiment, the planning device is an RTC5 or RTC6 control card of SCANLAB GmbH, in particular in the embodiment currently available on the date determining the priority of the present teachings.

In particular, the planning device may be provided externally or separately to a manufacturing device, wherein a data set is preferably created by the planning device, which is then transmitted in a suitable manner, for example by means of a data carrier or via a network, in particular via the Internet, or via another suitable wireless or wired form of transmission, to the manufacturing device, in particular a control device of the manufacturing device. However, the planning device can also be integrated into a manufacturing device. In particular, the planning device can be integrated into the control device of the manufacturing device, or the control device of the manufacturing device can be designed as a planning device, in particular by providing a suitable hardware component and/or by implementing a suitable computer program, in particular software. However, it is also possible for the planning device to comprise a plurality of computing devices, in which case, in particular, it is designed to be physically distributed.

Preferably, the planning device then comprises a plurality of interconnected computing devices. In particular, the planning device can be designed as a data cloud, or the planning device is part of a data cloud. In another embodiment, it is also possible for the planning device to comprise, on the one hand, at least one computing device external to the manufacturing device and, on the other hand, the manufacturing device, in particular the control device of the manufacturing device, in which case steps performed by the planning device are performed partly on the external computing device and partly on the manufacturing device, in particular on the control device. In particular, it is also possible that the planning device does not take over the complete planning of the locally selective irradiation of the working area, but only parts thereof; in particular, it is possible that the planning device takes over only that part of the planning of the locally selective irradiation of the working area which relates to the steps and/or determinations described above. Other parts of the planning of the locally selective irradiation, on the other hand, can be carried out in other computing devices, in particular in computing devices external to the manufacturing device, or also in the manufacturing device itself, in particular its control device, or in a data cloud.

According to a sixth aspect, the objective is in particular achieved by providing a manufacturing device for additively manufacturing objects from a powder material, having

- a beam generating device adapted to generate at least one energy beam,
- at least one scanning device adapted to locally selectively irradiate a working area with the at least one energy beam to produce an object from the powder material disposed in the working area by displacing the at least one energy beam along a plurality of irradiation vectors over the working area, and
- a control device operatively connected to the scanning device and adapted to control the scanning device, wherein
- the control device is adapted to carry out a (first or second) manufacturing method according to the invention, or at least according to any of the above-disclosed embodiments of the (first or second) manufacturing method.

With respect to the manufacturing device, in particular the same advantages are achieved as explained above in relation to the planning method, the first manufacturing method, the second manufacturing method, the computer program, and the planning device.

The scanning device preferably comprises at least one scanner, in particular a galvanometer scanner, piezo scanner, polygon scanner, MEMS scanner, and/or a working head or processing head displaceable relative to the working area. The scanning devices proposed herein are particularly suitable for displacing the energy beams within the working area along a plurality of irradiation vectors.

A working head or processing head displaceable relative to the working area is in particular understood to mean an integrated component of the manufacturing device, which has at least one radiation outlet for at least one energy beam, the integrated component, that is the working head, being displaceable as a whole relative to the working area along at least one displacement direction, preferably along two displacement directions perpendicular to each other. Such a working head can in particular be of portal design, or be guided by a robot. In particular, the working head can be designed as a robot hand of a robot.

In particular, the beam generating device is a laser, or comprises a plurality of lasers. The at least one energy beam then advantageously is generated as an intense beam of coherent electromagnetic radiation, in particular coherent light. In this respect, "irradiation" preferably means "exposure to light".

In an embodiment, he manufacturing device is adapted for selective laser sintering. Alternatively, or additionally, the manufacturing device is adapted for selective laser melting.

In an embodiment, the control device is selected from a group consisting of a computer, in particular a personal computer (PC), a plug-in card or driver card, and an FPGA board. In a preferred embodiment, the control device is an RTC5 or RTC6 control card from SCANLAB GmbH, in particular in the embodiment currently available on the date determining the priority of the present teachings.

The invention is explained below in further detail with reference the drawing. In the drawing

Figure 1     shows an embodiment of a manufacturing device comprising an embodiment of a planning device;

Figure 2     shows a schematic representation of an embodiment of a planning method for planning a locally selective irradiation of a working area with at least one energy beam to be carried out by the planning device according to figure 1.

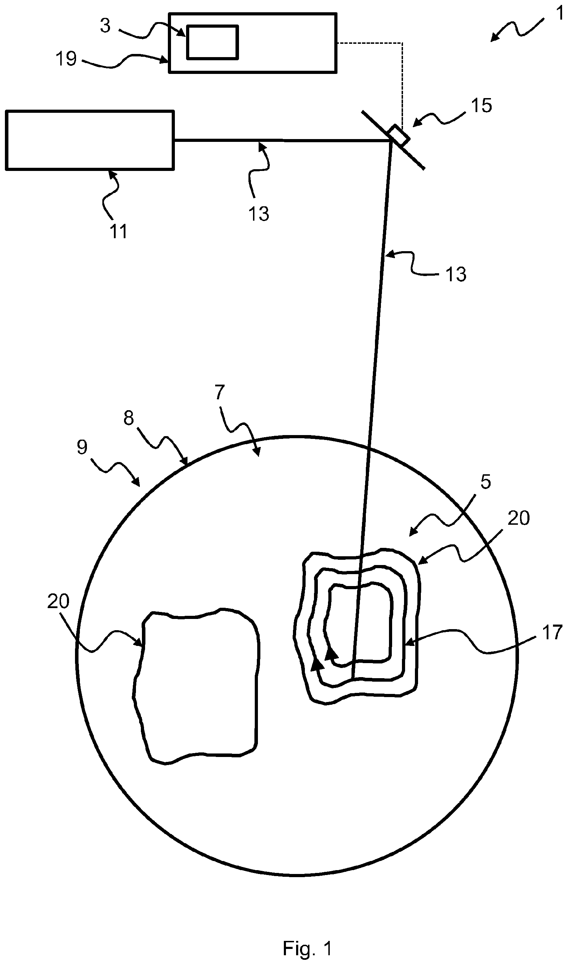

**Fig. 1** shows an embodiment of a manufacturing device 1 comprising an embodiment of a planning device 3.

The manufacturing device 1 is adapted to additively manufacture an object 5 from a powder material 7 arranged in a powder material layer 8 in a working area 9. The manufacturing device 1 has a beam generating device 11 adapted to generate at least one energy beam 13, in particular at least one laser beam. The manufacturing device 1 further has a scanning device 15 for displacing the at least one energy beam 13 along a plurality of irradiation vectors 17 over the working area 9, such that the working area 9 is locally selectively irradiated with the energy beams 13 to produce the object 5 from the powder material 7 disposed in the working area 9. Still further, the manufacturing device 1 has a control device 19 operatively connected to the scanning device 15 and adapted to control the scanning device 15.

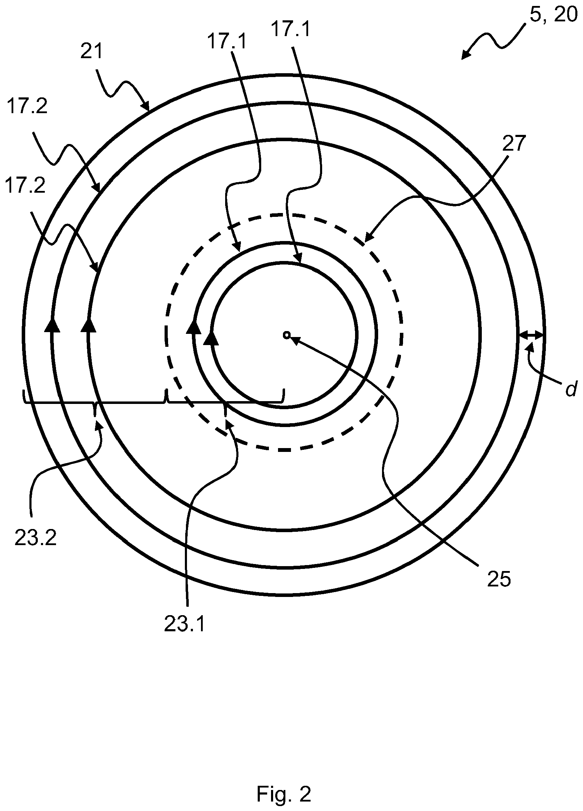

In the embodiment of figure 1, the control device 19 comprises the planning device 3. The planning device 3 is adapted to carry out a planning method according to an embodiment as explained below in particular with respect to figure 2, i.e. a method for planning a locally selective irradiation of the working area 9 with the at least one energy beam 13 by displacing the at least one energy beam 13 along the plurality of different irradiation vectors 17 over the powder material layer 8 in the working area 9 in order to manufacture the object 5.

Figure 1 schematically shows two islands 20 as isolated regions - separate from each other - of the object's 5 cross-section in the powder material layer 8.

The manufacturing device 1 is adapted to carry out a manufacturing method comprising the steps of providing an irradiation plan obtained by means of the planning method, and manufacturing the object 5 according to the irradiation plan (second manufacturing method), or an *ad hoc* manufacturing method as disclosed above (first manufacturing method).

In particular, the steps of the planning method are carried out for a plurality of powder material layers 8 arranged in a temporal layer sequence - one after the other, in temporal succession - in the working area 9. In this way, the three-dimensional object 5 can be produced layer by layer. In particular, the steps of the planning method are carried out in or for each powder material layer 8.

**Fig. 2** shows a schematic representation of an embodiment of a planning method for planning a locally selective irradiation of the working area 9 with the at least one energy beam 13 to be carried out by the planning device 3 according to figure 1.

The same or functionally equivalent elements are assigned the same reference numerals in all figures, such that reference is made in each case to the preceding explanations.

In particular, figure 2 schematically shows a cross-section of the object 5 in the powder material layer 8, or, alternatively, an island 20 of the object's 5 cross-section.

The planning method comprises i) determining the irradiation vectors 17 of the plurality of different irradiation vectors 17 each as a path following a contour line 21 of the object 5 in the powder material layer 8 with an assigned unique distinction parameter value of a distinction parameter $d_c$ depending on a - radial - contour distance $d$ between the respective irradiation vector 17 and the contour line 21, also referred to as "offset filling", the contour distance $d$ varying between the irradiation vectors 17, wherein the distinction parameter $d_c$ is defined in this embodiment to increase with decreasing contour distance $d$, ii) assigning at least a first, lower line energy value of a line energy to a first group 23.1 of first irradiation vectors 17.1 and at least a second, higher line energy value of the line energy to a second group 23.2 of second irradiation vectors 17.2, wherein the first irradiation vectors 17.1 each have smaller distinction parameter values than the second irradiation vectors 17.2, and iii) obtaining an irradiation plan.

The distinction parameter $d_c$ in particular is understood to mean a parameter which is indicative of the position of the respective irradiation vector 17 to which it is assigned within the plurality of irradiation vectors 17, in particular indicative for the contour distance $d$ of the respective irradiation vector 17. In the embodiment shown here, each irradiation vector 17 is in the form of a closed loop extending along the contour of the object 5, such that the distinction parameter $d_c$ unambiguously defines its respectively assigned irradiation vector 17.

The distinction parameter $d_c$ increases with decreasing contour distance, i.e. it is defined in such a way, that irradiation vectors 17 closer to the contour line 21 have greater distinction parameter values than irradiation vectors 17 being farther away, i.e. having a greater contour distance $d$, and thus being closer to a centre 25 of the object 5 - or, synonymously, centre of the island 20, when the object's 5 cross section comprises at least two islands 20. Thus, the distinction parameter $d_c$ rises towards the contour line 21.

The distinction parameter $d_c$ may preferably be defined as the negative contour distance -$d$, or according to one of equations (1) and (2) above. In an alternative approach, the distinction parameter $d_c$ may be a vector length of the respective irradiation vector 17. Still, in the alternative, the distinction parameter $d_c$ may just be the contour distance $d$, but not in accordance with the specific embodiment described in detail here.

Preferably, every single irradiation vector 17 in the powder material layer 8 is determined as a path following the contour line 21. It is possible, however, that in an embodiment not shown here other irradiation vectors are determined in addition to the plurality of different irradiation vectors 17, the additional irradiation vectors not being determined as paths following the contour line 21.

Preferably, the first group 23.1 and the second group 23.2 of irradiation vectors 17 are delimited from each other by a predetermined threshold distinction parameter value. In a predetermined region comprising the threshold distinction parameter value, the line energy may rise from the first line energy value to the second line energy value according to a rise function.

In the context of the present technical teachings, a region comprising the threshold distinction parameter value in particular is understood to mean a geometrical region in the working area 9 or the powder material layer 8 in which an imaginary borderline 27 between the first group 23.1 and the second group 23.2 of irradiation vectors 17 is located, wherein the imaginary borderline 27 is defined by the threshold distinction parameter value. In particular, the imaginary borderline 27 may have the shape of an irradiation vector 17 or even be one of the irradiation vectors 17, to which the threshold distinction parameter value - theoretically or actually - is assigned. The region comprising the threshold distinction parameter may include the centre 25 and/or end at the imaginary borderline 27.

The rise function may be defined according to equation (3) above. Preferably, the rise function is continuous.

In the alternative, the line energy assigned to the irradiation vectors 17 varies according to a variation function of the distinction parameter $d_c$, wherein preferably the line energy increases at least in regions with increasing distinction parameter values, in particular according to equation (4) above. Preferably, the variation function is continuous.

At least one function, selected from the rise function and the variation function, may be a linear function, in particular a ramp, or a polynomial of at least the second degree.

Preferably, a temporal sequence for processing of the irradiation vectors 17 is determined such that irradiation vectors 17 having a smaller distinction parameter value are processed prior to irradiation vectors 17 having a greater distinction parameter value. In accordance with the distinction parameter $d_c$ being so defined that it rises towards the contour line 21, this means that irradiation vectors 17 closer to the object's centre 25 are processed prior to irradiation vectors 17 closer to the contour line 21. Preferably, the irradiation vectors 17 are put in an unambiguous order according to their rising assigned distinction parameter values, and the temporal sequence is determined in accordance with this order.

In an embodiment of a first manufacturing method for additively manufacturing the object 5 from the powder material 7 the working area 9 is locally selectively irradiated with the at least one energy beam 13 by displacing the at least one energy beam 13 along the plurality of irradiation vectors 17 over the powder material layer 8 in the working area 9, wherein the irradiation vectors 17 each follow the contour line 21 of the object 5 in the powder material layer 8 with varying distinction parameter values of the distinction parameter $d_c$ so defined that the distinction parameter $d_c$ increases with decreasing contour distance $d$, the contour distance $d$ varying between the irradiation vectors 17, wherein, in a predetermined manner, the first irradiation vectors 17.1 of the first group 23.1 are processed with a lower line energy than the second irradiation vectors 17.2 of the second group 23.2, wherein the first irradiation vectors 17.1 have smaller distinction parameter values than the second irradiation vectors 17.2.

In particular, the first manufacturing method is carried out for a plurality of powder material layers 8, thus forming the object 5 in a temporal sequence of powder material layers 8, layer by layer.

The line energy preferably is varied according to a predetermined - preferably continuous - rise function of the distinction parameter $d_c$ in the predetermined region comprising the threshold distinction parameter value, where the line energy rises from the first line energy value to the second line energy value. Alternatively, the line energy is varied according to a predetermined - preferably continuous - variation function of the distinction parameter $d_c$, such that the line energy increases at least in regions, preferably globally, with increasing distinction parameter value. At least one function, selected from the rise function and the variation function, preferably is a linear function, in particular a ramp, or a polynomial of at least the second degree.

The line energy is preferably varied by varying at least one line energy parameter, selected from a group, consisting of a beam power of the at least one energy beam 13, a velocity of the displacement of the at least one energy beam 13 in the working area 9, and a combination of at least two of these line energy parameters.

Preferably, irradiation vectors 17 having smaller distinction parameter values are processed prior to irradiation vectors 17 having greater distinction parameter values.

In an embodiment of a second manufacturing method for additively manufacturing the object 5 from the powder material 7, an irradiation plan is obtained by means of the above disclosed planning method, and the object 5 is manufactured according to the irradiation plan.

## Claims

1. Method for planning a locally selective irradiation of a working area (9) with at least one energy beam (13) by displacing the at least one energy beam (13) along a plurality of different irradiation vectors (17) over a powder material layer (8) of a powder material (7) arranged in the working area (9) in order to manufacture an object (5), comprising:

   i) determining the irradiation vectors (17) of the plurality of different irradiation vectors (17) each as a path following a contour line (21) of the object (5) in the powder material layer (8) with an assigned unique distinction parameter value of a distinction parameter ($d_c$) depending on a contour distance ($d$) between the respective irradiation vector (17) and the contour line (21), the contour distance (*d*) varying between the irradiation vectors (17),

ii) assigning at least a first, lower line energy value of a line energy to a first group (23.1) of irradiation vectors (17) and at least a second, higher line energy value of the line energy to a second group (23.2) of irradiation vectors (17), wherein the irradiation vectors (17) of the first group (23.1) each have distinction parameter values relating to greater contour distances (*d*) than the irradiation vectors (17) of the second group (23.2), and

iii) obtaining an irradiation plan.

2. Method according to claim 1, wherein the first group (23.1) and the second group (23.2) of irradiation vectors (17) are delimited from each other by a predetermined threshold distinction parameter value.

3. Method according to claim 2, wherein, in a predetermined region comprising the threshold distinction parameter value, the line energy rises from the first line energy value to the second line energy value according to a - preferably continuous - rise function.

4. Method according to any of the preceding claims, wherein the line energy assigned to the irradiation vectors (17) varies according to a - preferably continuous - variation function of the distinction parameter *(d$_c$)*, wherein optionally the distinction parameter *(d$_c$)* increases with decreasing contour distance (*d*), and preferably the line energy increases at least in regions with increasing distinction parameter values.

5. Method according to at least one of claims 3 and 4, wherein at least one function, selected from the rise function and the variation function, is a linear function, in particular a ramp, or a polynomial of at least the second degree.

6. Method according to any of the preceding claims, wherein a temporal sequence for processing of the irradiation vectors (17) is determined such that irradiation vectors (17) having a distinction parameter value relating to a greater contour distance (*d*) are processed prior to irradiation vectors (17) having a distinction parameter value relating to a smaller contour distance (*d*).

7. Method according to any of the preceding claims, wherein the distinction parameter *(d$_c$)* is selected from a group, consisting of the contour distance (*d*), a vector length, the negative contour distance (-*d*), a preferably normalized distance parameter having a maximum at the contour line (21), and a combination parameter obtained by combining at least two of these parameters.

8. Method for additively manufacturing an object (5) from a powder material (7), comprising locally selectively irradiating a working area (9) with at least one energy beam (13) by displacing the at least one energy beam (13) along a plurality of irradiation vectors (17) over a powder material layer (8) of a powder material (7) arranged in the working area (9), wherein the irradiation vectors (17) each follow a contour line (21) of the object (5) in the powder material layer (8) with varying distinction parameter values depending on a contour distance (*d*) between the respective irradiation vector (17) and the contour line (21), the contour distance varying between the irradiation vectors (17), and wherein, in a predetermined manner, a first group (23.1) of the irradiation vectors (17) are processed with a lower line energy than a second group (23.2) of the irradiation vectors (17), wherein the irradiation vectors (17) of the first group (23.1) have distinction parameter values relating to greater contour distances than the irradiation vectors (17) of the second group (23.2).

9. Method according to claim 8, wherein the line energy is varied according to a predetermined - preferably continuous - variation function of the distinction parameter *(d$_c$)*, wherein optionally the distinction parameter *(d$_c$)* increases with decreasing contour distance (*d*), and preferably the line energy increases at least in regions with increasing distinction parameter value.

10. Method according to at least one of claims 8 and 9, wherein the line energy is varied by varying at least one line energy parameter, selected from a group, consisting of a power of the at least one energy beam (13), a velocity of the displacement of the at least one energy beam (13) in the working area (9), and a combination of at least two of these line energy parameters.

11. Method according to at least one of claims 8 to 10, wherein irradiation vectors (17) having a distinction parameter value relating to a greater contour distance (*d*) are processed prior to irradiation vectors (17) having a distinction parameter value relating to a smaller contour distance (*d*).

12. Method for additively manufacturing an object (5) from a powder material (7), comprising the following steps: providing an irradiation plan obtained by means of a method according to any one of claims 1 to 7, in particular by carrying out the method according to any one of claims 1 to 7, for the locally selective irradiation of a working area (9) with at least one energy beam (13), and manufacturing the object (5) according to the irradiation plan.

13. Computer program comprising instructions which, when the computer program is executed on a computing device, cause the computing device to carry out a method according to any of claims 1 to 7 or a method according to any of claims 8 to 12.

14. Planning device (3) for planning a locally selective irradiation of a working area (9) with at least one energy beam (13) in order to manufacture an object (5) from a powder material (7) arranged in the working area (9), wherein the planning device (3) is adapted to carry out a method according to any one of claims 1 to 7.

15. Manufacturing device (1) for additively manufacturing objects (5) from a powder material (7), having

    - a beam generating (11) device adapted to generate at least one energy beam (13),
    - at least one scanning device (15) adapted to locally selectively irradiate a working area (9) with the at least one energy beam (13) to produce an object (5) from the powder material (7) disposed in the working area (9) by displacing the at least one energy beam (13) along a plurality of irradiation vectors (17) over the working area (9), and
    - a control device (19) operatively connected to the scanning device (15) and adapted to control the scanning device (15), wherein
    - the control device (19) is adapted to carry out a method according to any of claims 8 to 12.

Fig. 1

Fig. 2

**EUROPEAN SEARCH REPORT**

Application Number

EP 24 17 0921

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 926 979 A1 (MATSURA KIKAI SEISAKUSHO KK [JP]) 7 October 2015 (2015-10-07) * paragraphs [0001], [0005] - [0009], [0018] - [0022], [0063] - [0071]; claims; figure 5 * | 1-15 | INV. B22F10/28 B22F10/36 B22F10/366 B22F10/80 B33Y10/00 |
| A | DE 103 20 085 A1 (BEGO MEDICAL AG [DE]) 26 February 2004 (2004-02-26) * the whole document * | 1-15 | B33Y50/00 B33Y50/02 G05B19/00 |
| A | CHOI S H ET AL: "A topological hierarchy-based approach to layered manufacturing of functionally graded multi-material objects", COMPUTERS IN INDUSTRY, ELSEVIER, AMSTERDAM, NL, vol. 60, no. 5, 1 June 2009 (2009-06-01), pages 349-363, XP026022586, ISSN: 0166-3615, DOI: 10.1016/J.COMPIND.2009.01.008 [retrieved on 2009-02-28] * the whole document * | 1-15 | |

| TECHNICAL FIELDS SEARCHED (IPC) |
|---|
| B22F G05B B33Y |

The present search report has been drawn up for all claims

| Place of search | Date of completion of the search | Examiner |
|---|---|---|
| The Hague | 12 October 2024 | Ceulemans, Judy |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 635 653 A1**

## ANNEX TO THE EUROPEAN SEARCH REPORT
## ON EUROPEAN PATENT APPLICATION NO.

EP 24 17 0921

12-10-2024

| Patent document cited in search report | | Publication date | Patent family member(s) | | Publication date |
|---|---|---|---|---|---|
| EP 2926979 | A1 | 07-10-2015 | CA | 2866530 A1 | 04-10-2015 |
| | | | CN | 104972121 A | 14-10-2015 |
| | | | EP | 2926979 A1 | 07-10-2015 |
| | | | ES | 2728952 T3 | 29-10-2019 |
| | | | JP | 2015199195 A | 12-11-2015 |
| | | | KR | 20150115595 A | 14-10-2015 |
| | | | US | 9138807 B1 | 22-09-2015 |
| DE 10320085 | A1 | 26-02-2004 | NONE | | |

EPO FORM P0459